(19) Europäisches Patentamt
European Patent Office
Office européen des brevets

(11) Publication number: **0 127 802**
**B1**

(12) **EUROPEAN PATENT SPECIFICATION**

(45) Date of publication of patent specification: **20.04.88**

(21) Application number: **84105359.8**

(22) Date of filing: **11.05.84**

(51) Int. Cl.$^4$: **C 07 C 87/28,** C 08 F 12/28, C 08 F 20/56, D 21 D 3/00, D 21 H 3/38

# (54) Meta- and para-isopropenyl-alpha,alpha-dimethylbenzylamine.

(30) Priority: **01.06.83 US 499923**
**01.06.83 US 499942**

(43) Date of publication of application:
**12.12.84 Bulletin 84/50**

(45) Publication of the grant of the patent:
**20.04.88 Bulletin 88/16**

(84) Designated Contracting States:
**AT BE CH DE FR GB IT LI NL SE**

(56) References cited:
**US-A-4 369 292**

**CHEMICAL ABSTRACTS, vol. 69, no. 7, 12th August 1968, page 2505, column 1, abstract no. 26978z & SU-A-193 526 (B.A. ZAITSEV et al.) 13-03-1967**

(73) Proprietor: **AMERICAN CYANAMID COMPANY**
**1937 West Main Street P.O. Box 60**
**Stamford Connecticut 06904-0060 (US)**

(72) Inventor: **Schaefer, Frederic Charles**
**14 Halton Court**
**Columbia South Carolina 29204 (US)**
Inventor: **Singh, Balwant**
**93 Janes Lane**
**Stamford Connecticut 06905 (US)**
Inventor: **Sedlak, John Andrew**
**249-11 Hamilton Avenue**
**Stamford Connecticut 06902 (US)**
Inventor: **Forgione, Peter Salvatore**
**120 Little Hill Drive**
**Stamford Connecticut 06905 (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to isopropenyl benzyl amine compounds, to compounds based thereon and their use for sizing paper.

In U.S. Patent 4,439,616 issued March 27, 1984, there is disclosed a method for production of tertiary aralkyl isocyanates, such as tetramethylxylylene diisocyanates (TMXDI), by thermal cracking of corresponding urethanes formed by addition to corresponding olefins of carbamic acid esters at moderate temperatures and in the presence of acid catalyst. Such process is particularly useful in producing the meta- and para-isomers of TMXDI and as the by-product thereof, substantial amounts of the corresponding meta-isopropenyl-α,α-dimethylbenzylisocyanate (m-TMI) and para-isopropenyl-α,α-dimethylbenzylisocyanate (p-TMI), respectively, are formed.

The m-TMI or p-TMI by-product in such systems may be recycled within the process to improve the overall yield of TMXDI therein, but has substantial utility per se as a separate product due to its difunctional character, vis., the presence of reactive isocyanato (-NCO) and isopropenyl groups.

Isopropenyl-α-methylbenzylamin is known from SU—193,526, whereas the unsubstituted isopropenylbenzylamine has been described US—A—4,369,292.

The present invention is directed to compounds which are derivable from TMI, specifically to meta- or para- compounds of the formula:

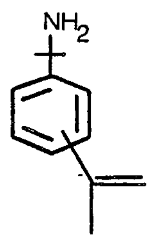

In another aspect, the invention relates to acid salts of the above compounds, of the formula:

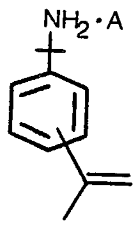

wherein A is a mineral acid or a carboxylic acid.

The invention also relates to a method of making meta- or para-isopropenyl-α,α-dimethylbenzylamine, comprising:

(a) hydrolyzing the corresponding meta- or para-isomer of isopropenyl-α,α-dimethylbenzylisocyanate in the presence of hydrochloric acid to form isopropenyl-α,α-dimethylbenzylamine hydrochloride; and

(b) reacting the isopropenyl-α,α-dimethylbenzylamine hydrochloride with a stoichiometric excess of sodium hydroxide to form the isopropenyl-α,α-dimethylbenzyl-amine.

The invention further relates to an alternative method for making m-isopropenyl-α,α-dimethylbenzylamine, comprising:

(a) heating a first solution of m-isopropenyl-α,α-dimethylbenzylisocyanate in methanol for sufficient time to form methyl (N-(3-isopropenyl-α,α-dimethylbenzyl)carbamate (TMU) in said first solution;

(b) mixing said first solution containing TMU with potassium hydroxide at a molar ratio of TMU:potassium hydroxide of from about 0.25 to about 0.50 and in sufficient amount of 2-methoxyethanol to form a second solution therewith;

(c) heating said second solution for sufficient time and at sufficient temperature to convert said TMU to m-isopropenyl-α,α-dimethylbenzylamine; and

(d) recoveriong m-isopropenyl-α,α-dimethylbenzylamine from said second solution.

This invention also relates to poly m-isopropenyl-α,α-dimethylbenzylamine), poly(p-isopropenyl-α,α-dimethylbenzylamine) and to copolymers of m- or p-isopropenyl-α,α-dimethylbenzylamine and at least one other ethylenically unsaturated comonomer polymerizable therewith.

m-Isopropenyl-α,α-dimethylbenzylamine and p-isopropenyl-α,α-dimethylbenzylamine (hereinafter m-TMA and p-TMA, respectively) are novel compounds which can be polymerized to give dimeric or oligomeric cationic products, and are copolymerizable with other ethylenically unsaturated comonomers to yield copolymers, and m-TMA and p-TMA are also homopolymerizable to form high molecular weight products. Meta- and para-TMA and their polymer products, as well as the acid salts thereof have potential utility in sizing of paper, as flocculants and in the formation of water-soluble cationic polymers for water clarification and hair spray end-use applications.

p-TMI, as for example is produced by the above-described method disclosed in U.S. Patent 4,439,616 is readily reacted to form the hydrochloric acid salt of p-TMA by hydrolysis in a reaction volume comprising p-TMI, dilute aqueous hydrochloric acid and acetone. Such reaction mixture may be reacted at room temperature in the presence of agitation to form a resulting fine suspension of reaction product. Acetone may be evaporated from the reaction product, following which filtration of the acetone-depleted reaction product yields the crude acid salt, isopropenyl-α,α-dimethylbenzylamine hydrochloride (TMA·HCl). From the crude acid salt product, TMA·HCl may be recovered, as for example by recrystallization from water. The free base (TMA) then may be obtained by mixing the acid salt with a stoichiometric excess of a strong base, such as sodium hydroxide, and extraction of the resulting reaction product with a solvent for TMA, such as hexane.

Although the foregoing procedure may be employed to prepare the acid salts and pure compounds of TMA, in preferred practice such procedure is employed for the preparation of the para acid salt and pure compound. An alternative procedure, which is highly efficient in the preparation of both isomers, and is the preferred preparation method for meta-isomers of the TMA acid salt and pure TMA.

In the alternative procedure, TMU may be prepared for example by heating a methanol solution of TMI as for example from six to about twenty hours at rflex without the presence of any catalyst. Alternatively, TMU may be prepared as disclosed in U.S. Patent Application Serial No. 457,083, filed January 10, 1983 in the names of B. Singh et al., in accordance with which N-tertiary aralkyl urethane esters are prepared by reaction of carbamic acid esters of an alkyl or aralkyl alcohol and a tertiary aralkyl diol. If the stoichiometric amount of the carbamate is limited in this reaction system, a selective conversion of the diol to mono-urethane takes place.

A solution of TMU then may be hydrolyzed by heating in the presence of base such as potassium hydroxide in an alcohol solvent such as 2-methoxyethanol at the boiling point of the solvent for a period of from about 1 to about 3 hours. The boiled solution is then cooled and mixed with methylene chloride to give a solution from which the 2-methoxyethanol is extracted using repeated treatments with water. Following this the methylene chloride containing product TMA may be dried as for example with molecular sieves or anhydrous potassium carbonate and distilled to recover TMA.

In such manner, poly(m-isopropenyl-α,α-dimethylbenzylamine), poly(p-isopropenyl-α,α-dimethylbenzylamine) and copolymers of m- or p-isopropenyl-α,α-dimethylbenzylamine and at least one other ethylenically unsaturated comonomer polymerizable therewith, may be formed.

Homopolymers of meta and para TMA or copolymers of one or both of them with other ethylenic comonomers such as styrene, methyl styrene, p-methystyrene, p-methyl-methylstyrene, alkylene hydrocarbons having two to eight carbon atoms, halogenated alkenes, acrylic and methacrylic monomers and the like, may be used effectively as material for paper sizing. Also useful for paper sizing are acid salts of the TMA homopolymers and copolymers.

Paper sizing comprises the known methods in paper making for adding to the paper composition a material called "size" which caused the finished paper to be more resistant to absorption of water, or to be more resistant to adverse effects of water absorbed by the paper. Many materials have been used as size in paper manufacturing, such as resin, hydrocarbon and natural wax emulsions, starch, glue, caseins, asphalt emulsions, synthetic resins, cellulose derivatives, etc. Size may be added in the aqueous pulp suspension before it is cast onto a paper forming screen (interal sizing) or the size may be applied in solution to the paper surface after the paper sheet has been formed (surface sizing).

The TMA homopolymers and copolymers of the invention may be employed for internal sizing in their acid salt form to make aqueous solutions of the size, or in an aqueous emulsion of the free amine polymers. For surface sizing, we prefer to use an aqueous solution of the acid salt polymer form or a solution of the free amine polymers in organic solvent. The solutions may be applied to the paper surface by spray or by immersion or other suitable means.

A preferred family of materials embodying the invention which are especially useful for paper sizing are the copolymers of meta or para TMA with a comonomer selected from styrene, α-methyl styrene, p-methylstyrene and p-methyl-α-styrene with from about 20 to 80 mole percent TMA and 80 to 20 percent of the selected styrene comonomers. Particularly preferred are copolymers of the acid salts of m- or p-TMA copolymerized with styrene or α-methylstyrene.

A preferred size solution according to the invention will be an aqueous solution of the acid salt of the selected copolymer or homopolymer of TMA, containing about 0.01% to about 3% by wt. of the polymers and having acidic pH in the range of from pH2 to about pH6.

The invention is illustrated by the following examples wherein all parts and percentages are by weight unless otherwise specified.

Example I

Polymers of the hydrochloric acid salt of m-TMA poly(m-TMA·HCl), were obtained by hydrolysis of poly(m-TMI) by the following procedures:

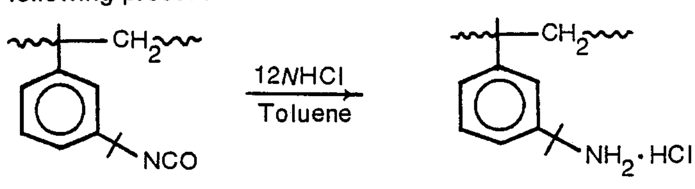

A mixture of 43 cc of 12*N* HCl (0.51 equiv.) and 400 cc of toluene was preheated to 60° and with vigorous stirring 170 g of 60.5% solution of poly-m-TMI (0.41 equiv.) in toluene was added in 75 min. The poly-*m*-TMI used in this experiment had a molecular weight range of 900—22000, peaking at 2900 (GPC analysis) and showed 3.99 meq-NCO/g. GLC analysis showed ~8% residual monomeric *m*-TMI. Carbon dioxide was evolved smoothly, and a granular suspension of the polyamine salt was produced. After another 90 minutes at 60—65°, the mixture was cooled and filtered. The granular, very slightly caked solid was washed with toluene and with methylene chloride and was air-dried to constant weight. There was no aqueous phase in the filtrate. The product (108 g) contained 7.2% water and on a dry basis showed a C.E.Q. of 3.25; i.e. 3.25 meq. of amine per g. Total chloride was 4.31 meq/g. The IR spectrum showed evidence for a minor amount of urea structure, in line with the reduced amine content relative to the initial isocyanate content of the polymer. However, the principal cause of this decrease was removal of monomeric *m*-TMI as m-TMA·HCl (soluble in $CH_2Cl_2$/toluene).

In several similar preparations, up to a 10-fold excess of 12*N* NCl was used. Even at this level essentially no polyamine hydrochloride dissolved although removal of impurities which are water-soluble probably resulted. If the reaction temperature was above ~70°C, the lower molecular weight polymers tended to form a gummy mass which greatly impeded hydrolysis and separation and purification of the desired product.

Poly-*m*-TMA·HCl was soluble in water to at least the 10% level although with high molecular weight material dissolution was quite slow. The TMA polymeric salt was readily soluble in wet acetone, which therefore could not be used to wash out the residual hydrochlorice acid.

Example II

The polyamine base poly(TMA) was prepared by treatment of the hydrochloride polymer obtained in Example I in water with excess NaOH and extraction with toluene or methylene chloride. The extract was dried over solid $K_2CO_3$ and evaporated to recover the polyamine as a syrup or glass, depending on its molecular weight. A typical polyamine prepared from 2900 peak M.W.-poly-*m*-TMI had 5.57% N (~3.98 meq/g) and —$NH_2$ content of 4.03 meq/g by conventional analysis.

Example III

*p*-TMI (40 g) gave no apparent reaction when mixed with 4*N* hydrochloric acid (75 cc) at room temperature. Acetone (75 cc) was then added to give some compatability to the mixture and the upper mixture was stirred overnight. During this time the upper liquid phase disappeared, and a fine suspension was produced. Filtration gave 9.0 g of crude *p*-TMA·HCL, mp ~220°, and another 22 g, mp 216—218° was obtained after most of the acetone was evaporated from the filtrate. Recrystallization from water or acetonitrile gave a material with mp, 223—225° at a ~80% yield. The mother liquors contained a substantial amount of N,N'-bis(4-isopropenyl-α,α-dimethylbenzy)urea.

Example IV

*p*-TMA·HCl (9.5 g) was added to 40 cc conc. sulfuric acid. A deep red colour developed with a mild exotherm and hydrogen chloride was evolved. The reaction mixture was heated on the steam bath for 1 hour, poured on ice, basified with sodium hydroxide, and extracted with $CH_2Cl_2$. The extract was dried with solid $H_2OH$ and then evaporated. Dilution of the residual syrup with hexane caused separation of a small amount of a solid which proved to be an aromatic sulfonate salt. Re-evaporation of the hexane solution left 7.3 g of syrup. There was essentially no change in the infrared spectrum after distillation of this product; the b.p. was ~195°/0.5 min. The NMR spectrum was indicative of an indane dimeric TMA structure shown below. The mass spectrum confirmed the empirical formula, and as chromatography showwd 97.9 area % of this compound.

Example V

The indane diamine

1-[4-(1-Amino-1-Methylethyl)phenyl]-6-(1-amino-1-methylethyl)-1,3,3-trimethylindane

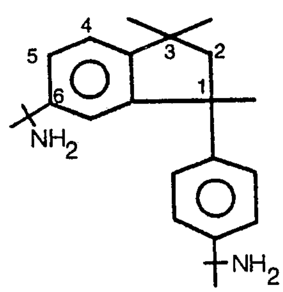

of Example IV was also prepared by hydrolysis/dimerization of *p*-TMI in 70% $H_2SO_4$ in a single step. *p*-TMI (10 g) in 10 cc of toluene was added dropwise to 98 g of preheated 70% $H_2SO_4$ at 60±5°. After carbon dioxide evaluation had subsided, the mixture was heated at 80° for 90 minutes. It was then cooled and poured on ice. This caused crystallization of the diamine sulfate which was filtered and pumped as dry as possible. The cold toluene/dil. $H_2SO_4$ filtrate was determined to contain virtually no dissolved amine salt. The collected amine salt (soluble in acetone or in water) was dissolved in water and basified with NaOH. The precipitated gum was extracted with $CH_2Cl_2$, the extract was dried over $K_2CO_3$, and the product was recovered by evaporation of the solvent. The infrared showed this to be equivalent to the diamine prepared from *p*-TMI·HCl by the procedure of Example IV.

Example VI

In contrast to *p*-TMI·HCl, the meta isomer of TMA was difficult to prepare satisfactorily by hydrolysis of *m*-TMI with hydrochloric acid, since linear oligomeric products tended to predominate in the reaction product.

*m*-TMA base was therefore prepared by alkaline hydrolysis of methyl N-(3-isopropenyl-α,α-dimethylbenzyl)carbamate(*m*-TMU) as follows.

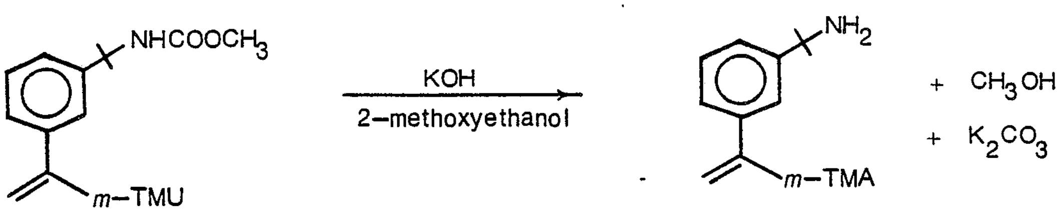


*m*-TMU was prepared by heating a methanol solution of *m*-TMI overnight at reflux without catalyst. The pure compound had a boiling point of 126°/0.5 mm, and is an extremely viscous liquid which eventually crystallizes at room temperature if stabilized with t-butylcatechol. In the absence of a stabilizer, *m*-TMI polymerizes slowly at room temperature, e.g., 20% after one month at ambient conditions.

A solution of 250 g *m*-TMU (91%, ~1.0 mole) and 165 g 85% KOH (2.5 moles) in 460 cc of 2-methoxyethanol was heated at the boil for 2.5 hours. It was then cooled and mixed with 500 cc of $H_2O$ and 700 cc of $CH_2Cl_2$. The amine-containing $CH_2Cl_2$ phase was separated and washed repeatedly with 500 cc portions of water until its volume remained constant, thus extracting residual 2-methoxyethanol. The $CH_2Cl_2$ solution was then dried with $K_2CO_3$ and distilled. *m*-TMA was recovered in 93% purity, b.p. 106°/2 mm. The yield was 128 g, 73% of theory. A non-separable by-product was found by capillary GLC which may have constituted an additional 2% yield of *p*-TMA. About 4—5% of unconverted *m*-TMU was recovered, indicating that the hydrolysis might have been conducted somewhat longer, to advantage. Two by-products found in the higher boiling fractions proved to be *m* TMXDA from the slight amount of *m*-TMXDU in the starting material and the transesterified urethane:

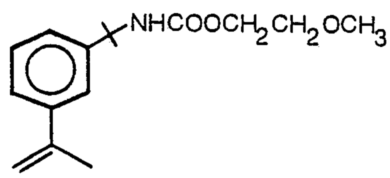

which would have been converted to *m*-TMA on longer hydrolysis.

Example VII

1-[3-(1-amino-1-methylethyl)phenyl]-5-(1-amino-1-methylethyl)-1,3,3-triethylindane:

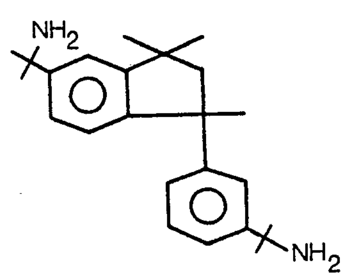

was produced by dimerization of m-TMA according to the procedure set forth. Several experiments in which *m*-TMA oligomerization was studied lead to the conclusion that relatively dilute acid (e.g. 37% HCl) yielded only linear oligomers while more concentrated acid (e.g. 85% $H_2SO_4$) produced cyclized (indane) dimer even at room temperature.

A solution of 28.9 g of m-TMA (93%; ~170 meq. base) in 150 cc of hexane was chilled in ice and treated dropwise with 8 cc 18 *N* $H_2SO_4$ with vigourous stirring. This resulted in a creamy suspension of crystallized amine salt. To this was added gradually 30 cc of 36 *N* $H_2SO_4$. A red-violet color developed at once and reaction was mildly exothermic, but the temperature was held at 20—30° by ice-bath cooling. The amine salt rapidly dissolved in the viscous acid phase. After 15 minutes the reaction mixture was warmed to 50°C briefly to ensure completion of the reaction. This caused degradation of the bright color to tan. After addition of 200 g of ice, the mixture was basified with excess strong NaOH solution and the nexane phase was separated. This was dried over solid $K_2CO_3$, evaporated to a syrup (19.2 g) and analyzed by GLC which showed 90 wt.% with less than 5 area % impurities. The IR spectrum showed only this structure present. Some hexane insoluble gum in the reaction mixture largely dissolved on further extraction with $CH_2Cl_2$, leaving a little flocculant insoluble material. The $CH_2Cl_2$ extract yielded another 8.6 g of syrup showing 72 wt.% of the dimeric cycle indane but containing a significant amount of much less volatile higher oligomers as well as minor linear dimers. The total yield of the cyclized indane dimer was approximately 86% based on starting real *m*-TMA (GLC analysis).

Example VIII

In a larger run carried out in the same manner as Example VII, but with toluene instead of hexane, alkylation of the solvent was a serious side reaction:

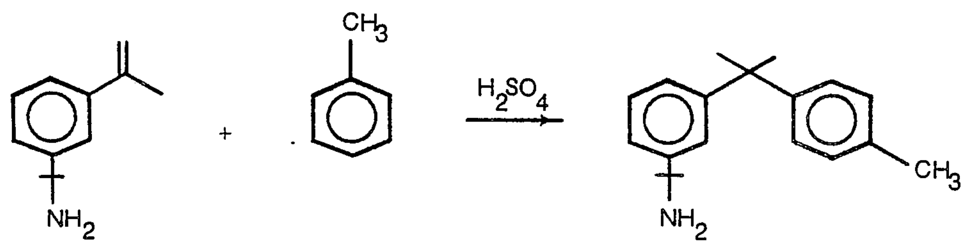


2-[*m*-(1-amino-1-methylethyl)phenyl]-2-*p*-tolylpropane

Distillation of the crude product from 78 g of *m*-TMA gave a 71% yield of the above alkylation product in several fractions. About 10% of the product was essentially non-volatile polyamine. Fractionation of m-indanediamine from the less volatile diamine was inefficient because of the very high boiling points of these compounds. A fraction boiling at 172—181° at 1 mm contained 36% monoamine and 61% of the cyclized indane dimer. The best product, b.p. 186°/1 mm was 96.8 area % m-indanediamine with 0.4 area % monoamine and 1% each of three slightly higher boiling by-products.

On analysis, this material was determined to contain 5.74 meq $NH_2$/g: calc., 5.71. It was a very viscous syrup at room temperature.

Successful dimerization of *m*-TMA in strong sulfuric acid required initial conversion to amine salt (either hydrochloride or sulfate) in less concentrated acid at low temperature to avoid violent localized reaction. Preferably the amine salt then should be added to strong sulfuric acid (e.g., 85%) to minimize formation of higher oligomers under weaker acid conditions.

Example IX

The monoamine shown in Example VIII was also prepared from *m*-TMI by the following procedure.

A mixture of 200 cc of 36N $H_2SO_4$ and 100 cc of heptane was preheated to 65° and to it gradually was added during a two-hour period a solution of 252 g of *m*-TMI (1.24 mole) in 250 cc of heptane. The reaction temperature was held at 70—80 C by gentle heating, and the rate of addition was controlled to keep evolution of carbon dioxide vigorous. The reaction mixture was a viscous red/violet syrup throughout this operation. After carbon dioxide evolution had stopped, the mixture was allowed to cool and was then basified (at 50—60°C) by cautious addition of strong aqueous sodium hydroxide (8 moles). The heptane phase was then separated and the aqueous phase re-extracted with a small amount of additional heptane. The combined heptane solution was dried with solid $K_2CO_3$ and evaporated to obtain 219.5 g of crude amine (theory, 217 g).

The crude indane diamine was distilled through a simple Vigreaux apparatus, yielding 154 g, b.p. ~165°/5 mm, approx. 97 area % pure by GLC (71% yield). Approximately 23 g (11% yield) of much higher boiling material was also obtained, presumably a trimer mixture of at least four principal components (GLC analysis), b.p. 220—230°/0.5 mm, amine equivalent wt. 207 (theory 175). $^{13}C$—NMR shows indane structure in this fraction at a level of about one indane unit to four phenyl groups. Additional less volatile product was obtained as a distillation residue. Two minor components appeared to be chromatographically identical to the linear dimers obtained in 12*N* HCl in Example X.

Example X

Attempts to hydrolyze *m*-TMI to *m*-TMA·HCl using 12*N* HCl in acetone (at 25°C) or toluene (65°C) did not give a crystalline salt as with the p-isomer. Apparently the hydrochloride which remained dissolved in the acid solution or aqueous phase underwent some degree of oligomerization. In the 12*N* HCl/acetone

system about 15% could be recovered as *m*-TMA by basification after 20 hours at room temperature. Another 15% of the TMI was converted to 1-(1-amino-1-methylethylethyl)-3(1-hydroxy-1-methylethyl)benzene,

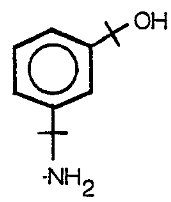

b.p. 150°C/1 mm, f.p. 86°C). GLC analysis of the undistilled higher boiling residue showed no indane diamine of the type shown in Example VII.

The 12*N* HCl/toluene system at 65°C (90 min) gave slight amounts of *m*-TMA and hydroxyamine with a trace of III. About half of the base produced was distillable at 230—380°C/1 mm, apparently a mixture of the same linear dimers and trimers as obtained at lower temperature. No indication of indane structure was found by $^{13}C$—NMR.

Example XI

A copolymer of TMA and α-methylstyrene was formed by hydrolysis of a 70 mole % m-TMI/30 mole % α-methylstyrene copolymer by the following procedure.

Sixty-five grams of 70 mole % m-TMI/30 mole % α-methylstyrene copolymer were dissolved in 200 g of anhydrous toluene and placed in a dropping funnel. During a ten minute period, the copolymer solution was added to 215 ml of 12*N* hydrochloric acid vigorously stirred in an 85°C oil bath. Precipitation of white solid produced a thick mixture, which was stirred for an additional hour at 90—95°C and then cooled to room temperature.

The product was filtered to obtain finely-divided white solid. After drying at 25°C/100 mm Hg, the solid weighed 125.3 g.

Sixty grams of the solid was shaken with a mixture of 100 ml of water, 250 ml of methylene chloride and 38.4 g of 33.3% sodium hydroxide solution. The solid dissolved to form a cloudy solution of the polyamine in methylene chloride. The remaining 65 g of solid was similarly treated.

The two methylene chloride solutions were combined, the solvent was evaporated under vacuum, and the residue was dried at 60°C/1 mm Hg to giv e 48.2 g of off-white solid. The infrared spectrum of the product was consistent with the expected m-TMA/α-methylstyrene copolymer structure.

Example XII

A copolymer of TMA and α-methylstyrene was obtained by hydrolysis of a 70 mole % *m*-TMI/30 mole % α-methylstyrene copolymer by the following procedure.

Sixty-five grams of 70 mole % m-TMI/30 mole % α-methylstyrene copolymer were dissolved in 200 g of anhydrous toluene and placed in a dropping funnel. During a ten minute period, the copolymer solution was added to 215 ml of 12*N* hydrochloric acid vigorously stirred in an 85°C oil bath. Precipitation of white solid produced a thick mixture, which was stirred for an additional hour at 90—95°C and then rapidly cooled to room temperature.

The product was vacuum filtered to obtain moist, finely-divided white solid. After drying at 25°C/100 mm Hg, the solid weighed 125.3 g.

Sixty grams of the solid was shaken with a mixture of 100 ml of water, 250 ml of methylene chloride and 38.4 g of 33.3% sodium hydroxide solution. The solid dissolved in the methylene chloride to form a cloudy solution. The remaining 65 g of solid was similarly treated.

The two solutions were combined, the methylene chloride was evaporated under vacuum, and the resulting solid was dried at 60°C/1 mm Hg to give 48.2 g of off-white solid. The infrared spectrum of the product was indicative of m-TMA/α-methylstyrene copolymer.

Example XIII

A series of separate copolymerization reactions was run to produce 40% m-TMI/6-% α-MeST, 50% m-TMI/50% α-MeST, and 70% m-TMI/30% α-MeST copolymers (percentages are mole percent; α-MeST = α-methylstyrene) in methylene chloride solvent using $BF_3 \cdot Et_2O$ catalyst at −50°C, with "controlled addition" of α-MeST to the reaction volume containing *m*-TMI, catalyst and solvent. High conversion of monomers was achieved to yield copolymers of substantially homogeneous composition having peak molecular weights of 20,000 to 50,000.

Example XIV

The copolymers of Example XIII were hydrolyzed under acidic conditions (in excess hydrochloric acid aqueous solution) to convert the isocyanate (—NCO) groups of the TMI copolymers to amino groups. Of the resulting hydrolyzed copolymers, the 30% α-MeST copolymer was completely soluble in aqueous acetic acid, whereas the 50% and 60% α-MeST copolymers were not so fully soluble.

### Example XV

The 70% m-isopropenyl-α,α-dimethylbenzylamine/30% α-MeST copolymer (hereinafter denoted TMA copolymer) of Example V (peak molecular weight of 27,000) was employed in quantitative tests for sizing of paper as compared with prior art conventional sizing compositions.

In the comparison, three grades of paper were used, all made from bleached pulp. These contained: (1) 10% calcium carbonate and 0.15% CYPRO 516 quaternary polyamine (American Cyanamid Company, Wayne, New Jersey) added; (2) waterleaf paper (no additives) and (3) 0.10% Alum added.

The TMA copolymer was dissolved at 0.18% and 0.093% concentrations in water containing, respectively, 0.5% and 0.25% acetic acid. The solutions were clear and colorless; pH 3. CYPRES 48, a conventional sizing resin (American Cyanamid Company, Wayne New Jersey), was dissolved at 0.187% and 0.093% concentrations in water. The solutions were clear; pH 9 and 8, respectively.

The two solutions of each sizing agent were used to impregnate sheets of the three paper grades to dose 0.10% and 0.20% (based on weight of the paper) of the two sizes. The sheets were drum-dried at 105°C for 1.5 minutes and post-cured in air at 105° for five minutes. Sizing evaluations were performed by means of a liquid penetration tester which employed photoelectric sensing. Water containing a green dye ("green water," pH 6.8) and TAPPI ink (pH 2.3) were used as test liquids. The results are summarized in Table I below.

TABLE I

| Size | Paper | Size Dosage % | Penetration Time, Sec. Green Water | Penetration Time, Sec. TAPPI Ink |
|---|---|---|---|---|
| TMA Copolymer | $CaCO_3$-filled | 0.10 | 2000+ | 423 |
| | | 0.20 | 2000+ | 597 |
| | Waterleaf | 0.10 | 326 | 194 |
| | | 0.20 | 561 | 90 |
| | Alum-treated | 0.10 | 689 | 3 |
| | | 0.20 | —* | —* |
| CYPRES 48 | $CaCO_3$-filled | 0.10 | 2 | 1 |
| | | 0.20 | 2 | 3 |
| | Waterleaf | 0.10 | 4 | 3 |
| | | 0.20 | 2 | 3 |
| Alum-treated | 0.10 | 5 | 5 | |
| | | 0.20 | 15 | 15 |

* Not tested

These results show that the TMA copolymer was effective in yielding good sizing against water (pH, 6.8) and ink (pH, 2.3).

### Example XVI

A 67 mole percent *m*-isopropenyl-α,α-dimethylbenzylamine/33 mole percent α-MeST copolymer (hereinafter denoted TMA/α-MeST copolymer) (a peak molecular weight of 20,000), a 24% m-isopropenyl-α,α-dimethylbenzylamine/76% styrene copolymer (hereinafter denoted TMA/ST copolymer), and a m-isopropenyl-α,α-dimethylbenzylamine homopolymer (hereinafter denoted TMA homopolymer) (peak molecular weight of 50,000 to 100,000) were employed in quantitative tests for sizing of paper.

In the tests, two grades of paper were used, both made from bleached pulp. These contained: (1) 10% calcium carbonate and 0.15% CYPRO 516 quaternary polyamine (American Cyanamid Co., Wayne, New Jersey) added; (2) waterleaf paper (no additives).

Each polymer was dissolved at 0.187% and 0.0935% concentrations in water containing, respectively, 0.5% and 0.25% acetic acid. The pH of each solution was approximately 3.

The two solutions of each sizing agent were used to impregnate sheets of the two paper grades to dose 0.10% and 0.20% (based on weight of the paper) of the three sizes. The sheets were drum-dried at 105°C for 1.5 minutes and post-cured in air at 105°C for five minutes. Sizing evaluations were performed by means of a liquid penetration tester which employed photoelectric sensing. Water containing a green dye ("green water," pH 6.8) and TAPPI ink (pH 2.3) were used as test liquids. The results are summarized in Table II below.

TABLE II

| Size | Paper | Size Dosage % | Penetration Time, Sec. Green Water | Penetration Time, Sec. TAPPI Ink |
|---|---|---|---|---|
| TMA/ -MeST Copolymer | $CaCO_3$-filled | 0.10 | 2000+ | 1118 |
| | | 0.20 | 2000+ | 1468 |
| | Waterleaf | 0.10 | 442 | 402 |
| | | 0.20 | 544 | 608 |
| TMA/ST Copolymer | $CaCO_3$-filled | 0.10 | 398 | 420 |
| | | 0.20 | 2,000+ | 687 |
| | Waterleaf | 0.10 | 156 | 226 |
| | | 0.20 | 382 | 951. |
| TMA Homopolymer | $CaCo_3$ filled | 0.10 | 1384 | 44 |
| | | 0.20 | 2000+ | 182 |
| | Waterleaf | 0.10 | 76 | 2 |
| | | 0.20 | 250 | 7 |

**Claims for the Contracting States: BE CH DE FR GB IT LI NL SE**

1. A meta- or para-compound of the formula:

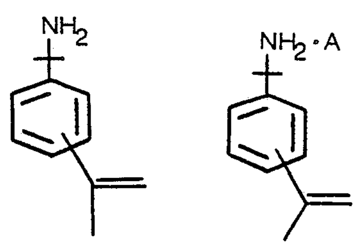

wherein A is a mineral acid or a carboxylic acid.

2. A process for making meta- or para-isopropenyl-α,α-dimethylbenzylamine, characterized by:

(a) hydrolyzing the corresponding meta- or para-isomer of isopropenyl-α,α-dimethylbenzylisocyanate in the presence of hydrochloric acid or sulfuric acid to form isopropenyl-α,α-dimethylbenzylamine salt; and

(b) reacting said isopropenyl-α,α-dimethylbenzylamine salt with a stoichiometric excess of sodium hydroxide to form said isopropenyl-α,α-dimethylbenzylamine.

3. A process for making meta- or para-isopropenyl-α,α-dimethylbenzylamine by hydrolysis of the corresponding meta- or para-isomer of methyl N-(3-isopropenyl-α,α-dimethylbenzyl)carbamate.

4. A process for making meta-isopropenyl-α,α-dimethylbenzylamine, comprising:

(a) heating a first solution of m-isopropenyl-α,α-dimethylbenzylisocyanate in methanol for sufficient time to form methyl (N-(3-isopropenyl-α,α-dimethylbenzyl)carbamate in said first solution;

(b) mixing said first solution containing methyl N-(3-isopropenyl-α,α-dimethylbenzyl) carbamate with potassium hydroxide and 2 methoxyethanol to make a second solution;

(c) heating said second solution for sufficient time and at sufficient temperature to convert said TMU to m-isopropenyl-α,α-dimethylbenzylamine; and

(d) recoveriong m-isopropenyl-α,α-dimethylbenzylamine from said second solution.

5. Poly(m-isopropenyl-α,α-dimethylbenzylamine) or Poly(*p*-isopropenyl-α,α-dimethylbenzylamine) formed from the compound of claim 1.

6. A copolymer of meta- or para-isopropenyl-α,α-dimethylbenzylamine and at least one other ethylenically unsaturated comonomer polymerizable therewith.

7. A method of sizing paper, comprising applying thereto a sizingly effective amount of polymer consisting of:

(a) homopolymers of meta- or para-isopropenyl-α,α-dimethylbenzylamine;

(b) copolymers of (i) meta- or para-isopropenyl-α,α-dimethylbenzylamine and (ii) at least one other ethylenically unsaturated monomer copolymerizable therewith, wherein said copolymer contains at least one weight percent repeating units derived from the amine comonomer (i); or

(c) acid salts of said homopolymers (a) and copolymers (b).

8. A paper sizing composition comprising an aqueous solution containing from about 0.01% to about 3% by weight of a polymer consisting of:

(a) homopolymers of meta- or para-isopropenyl-α,α-dimethylbenzylamine;

(b) copolymers of (i) meta- or para-isopropenyl-α,α-dimethylbenzylamine and (ii) at least one other ethylenically unsaturated monomer copolymerizable therewith, wherein said copolymer contains at least one weight percent repeating units derived from the amine comonomer (i); or

(c) acid salts of said homopolymers (a) and copolymers (b).

9. A sizing composition according to Claim 8, characterized by an acid pH.

**Claims for the Contracting State: AT**

1. A process for making meta- or para-isopropenyl-α,α-dimethylbenzylamine, characterized by:

(a) hydrolyzing the corresponding meta- or para-isomer of isopropenyl-α,α-dimethylbenzylisocyanate in the presence of hydrochloric acid or sulfuric acid to form isopropenyl-α,α-dimethylbenzylamine salt; and

(b) reacting said isopropenyl-α,α-dimethylbenzylamine salt with a stoichiometric excess of sodium hydroxide to form said isopropenyl-α,α-dimethylbenzylamine.

2. A process for making meta- or para-isopropenyl-α,α-dimethylbenzylamine by hydrolysis of the corresponding meta- or para-isomer of methyl N-(3-isopropenyl-α,α-dimethylbenzyl)carbamate.

3. A process for making meta-isopropenyl-α,α-dimethylbenzylamine, comprising:

(a) heating a first solution of m-isopropenyl-α,α-dimethylbenzylisocyanate in methanol for sufficient time to form methyl (N-(3-isopropenyl-α,α-dimethylbenzyl)carbamate in said first solution;

(b) mixing said first solution containing methyl N-(3-isopropenyl-α,α-dimethylbenzyl) carbamate with potassium hydroxide and 2 methoxyethanol to make a second solution;

(c) heating said second solution for sufficient time and at sufficient temperature to convert said TMU to m-isopropenyl-α,α-dimethylbenzylamine; and

(d) recovering m-isopropenyl-α,α-dimethylbenzylamine from said second solution.

4. A process for preparing Poly(m-isopropenyl-α,α-dimethylbenzylamine) or Poly(p-isopropenyl-α,α-dimethylbenzylamine), characterized in that meta- or para-isopropenyl-α,α-dimethylbenzylamine, respectively, is polymerized.

5. A process for preparing a copolymer by copolymerization of meta- or para-isopropenyl-α,α-dimethylbenzylamine and at least one other ethylenically unsaturated comonomer polymerizable therewith.

6. A method of sizing paper, comprising applying thereto a sizingly effective amount of polymer consisting of:

(a) homopolymers of meta- or para-isopropenyl-α,α-dimethylbenzylamine;

(b) copolymers of (i) meta- or para-isopropenyl-α,α-dimethylbenzylamine and (ii) at least one other ethylenically unsaturated monomer copolymerizable therewith, wherein said copolymer contains at least one weight percent repeating units derived from the amine comonomer (i); or

(c) acid salts of said homopolymers (a) and copolymers (b).

7. A paper sizing composition comprising an aqueous solution containing from about 0.01% to about 3% by weight of a polymer consisting of:

(a) homopolymers of meta- or para-isopropenyl-α,α-dimethylbenzylamine;

(b) copolymers of (i) meta- or para-isopropenyl-α,α-dimethylbenzylamine and (ii) at least one other ethylenically unsaturated monomer copolymerizable therewith, wherein said copolymer contains at least one weight percent repeating units derived from the amine comonomer (i); or

(c) acid salts of said homopolymers (a) and copolymers (b).

8. A sizing composition according to Claim 8, characterized by an acid pH.

**Patentansprüche fur die Vertragsstaaten: BE CH DE FR GB IT LI NL SE**

1. Meta- oder para-Verbindung der Formel

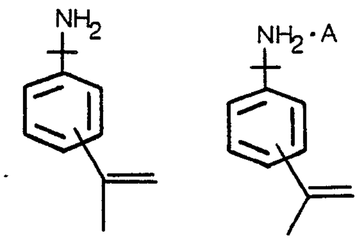

wobei A ein Mineralsäure oder eine Carbonsäure ist.

2. Verfahren zur Herstellung von meta- oder para-Isopropenyl-α,α-dimethylbenzylamin, gekennzeichnet durch:

(a) Hydrolysieren des korrespondieren meta- oder para-Isomeren von Isopropenyl-α,α-dimethylbenzylisocyanats in Gegenwart von Chlorwasserstoffsäure oder Schwefelsäure zur Bildung des Isopropenyl-α,α-dimethylbenzylaminsalzes; und

(b) Umsetzung des Isopropenyl-α,α-dimethylbenzylaminsalzes mit einem stoichiometrischen Überschuß von Natriumhydroxid zur Bildung des Isopropenyl-α,α-dimethylbenzylamins.

3. Verfahren zur Herstellung von meta- oder para-Isopropenyl-α,α-dimethylbenzylamin durch Hydrolyse des korrespondierenden meta- oder para-Isomeren von Methyl-N-3-isopropenyl-α,α-dimethylbenzyl)carbamats.

4. Verfahren zur Herstellung von meta-Isopropenyl-α,α-dimethylbenzylamin, umfassend:

(a) Erhitzen einer ersten Lösung von m-Isopropenyl-α,α-dimethylbenzylisocyanat in Methanol während einer ausreichenden Zeit zur Bildung von Methyl-N-(3-isopropenyl-α,α-dimethylbenzyl)carbamat in der ersten Lösung;

(b) Mischen der ersten Lösung mit einem Gehalt an Methyl-N-(3-isopropenyl-α,α-dimethylbenzyl)carbamat mit Kaliumhydroxid und 2-Methoxyethanol zur Herstellung einer zweiten Lösung;

(c) Erhitzen der zweiten Lösung während eine ausreichenden Zeit und bei ausreichender Temperatur zur Umwandlung des TMU in m-Isopropenyl-α,α-dimethylbenzylamin; und

(d) Isolieren von m-Isopropenyl-α,α-dimethylbenzylamin aus der zweiten Lösung.

5. Poly(m-isopropenyl-α,α-dimethylbenzylamin) oder Poly(*p*-isopropenyl-α,α-dimethylbenzylamin) gebildet aus der Verbindung von Anspruch 1.

6. Ein Copolymeres von meta- oder para-Isopropenyl-α,α-dimethylbenzylamin und mindestens einem weiteren ethylenisch ungesättigten Comonomeren, das damit polymerisierbar ist.

7. Verfahren zum Schlichten von Papier, umfassend die Applikation einer für die Schlichtung wirksamen Menge eines Polymeren, bestehend aus

(a) Homopolymeren von meta- oder para-Isopropenyl-α,α-dimethylbenzylamin;

(b) Copolymeren von (i) meta- oder para-Isopropenyl-α,α-dimethylbenzylamin und (ii) mindestens einem weiteren ethylenisch ungesättigten Monomeren, das damit copolymerisierbar ist, wobei das Copolymere mindestens 1 Gew.-% Wiederholungseinheiten enthält, die von dem Amin-Comonomeren (i) stammen; oder

(c) Säuresalzen der Homopolymeren (a) und Copolymeren (b).

8. Papierschlichtmittel-Zusammensetzung, umfassend eine wässrige Lösung, enthaltend von etwa 0,01 Gew.-% bis etwa 3 Gew.-% eines Polymeren, bestehend aus

(a) Homopolymeren von meta- oder para-Isopropenyl-α,α-dimethylbenzylamin;

(b) Copolymeren von (i) meta- oder para-Isopropenyl-α,α-dimethylbenzylamin und (ii) mindestens einem weiteren ethylenisch ungesättigten Monomeren, das damit copolymerisierbar ist und wobei das Copolymere mindestens 1 Gew.-% Wiederholungseinheiten enthält ist, die von dem Amin-Comonomeren (i) stammen; oder

(c) Säuresalzen der Homopolymeren (a) und Copolymeren (b).

9. Schlichtmittelzusammensetzung gemäß Anspruch 8, gekennzeichnet durch einen sauren pH.

**Patentansprüche für den Vertragsstaat: AT**

1. Verfahren zur Herstellung von meta- oder para-Isopropenyl-α,α-dimethylbenzylamin, gekennzeichnet durch:

(a) Hydrolysieren des korrespondierenden meta- oder para-Isomeren von Isopropenyl-α,α-dimethylbenzylisocyanats in Gegewart von Chlorwasserstoffsäure oder Schwefelsäure zur Bildung des Isopropenyl-α,α-dimethylbenzylaminsalzes; und

(b) Umsetzung des Isopropenyl-α,α-dimethylbenzylaminsalzes mit einem stoichiometrischen Überschuß von Natriumhydroxid zur Bildung des Isopropenyl-α,α-dimethylbenzylamins.

2. Verfahren zur Herstellung von meta- oder para-Isopropenyl-α,α-dimethylbenzylamin durch Hydrolyse des korrespondierenden meta- oder para-Isomeren von Methyl-N-3-isopropenyl-α,α-dimethylbenzyl)carbamats.

3. Verfahren zur Herstellung von meta-Isopropenyl-α,α-dimethylbenzylamin, umfassend:

(a) Erhitzen einer ersten Lösung von m-Isopropenyl-α,α-dimethylbenzylisocyanat in Methanol während einer ausreichenden Zeit zur Bildung von Methyl-N-(3-isopropenyl-α,α-dimethylbenzyl)carbamat in der ersten Lösung;

(b) Mischen der ersten Lösung mit einem Gehalt an Methyl-N-(3-isopropenyl-α,α-dimethylbenzyl)carbamat mit Kaliumhydroxid und 2-Methoxyethanol zur Herstellung einer zweiten Lösung;

(c) Erhitzen der zweiten Lösung während eine ausreichenden Zeit und bei ausreichender Temperatur zur Umwandlung des TMU in m-Isopropenyl-α,α-dimethylbenzylamin; und

(d) Isolieren von m-Isopropenyl-α,α-dimethylbenzylamin aus der zweiten Lösung.

4. Verfahren zur Herstellung von Poly(m-isopropenyl-α,α-dimethylbenzylamin) oder Poly(p-isopropenyl-α,α-dimethylbenzylamin) dadurch gekennzeichnet, daß man meta-bzw. para-Isopropenyl-α,α-dimethylbenzylamin polymerisiert.

5. Verfahren zur Herstellung eines Copolymeren durch Copolymerisation von meta- oder para-Isopropenyl-α,α-dimethylbenzylamin und mindestens einem weiteren ethylenisch ungesättigten Comonomeren, das damit polymerisierbar ist.

6. Verfahren zum Schlichten von Papier, umfassend die Applikation einer für die Schlichtung wirksamen Menge eines Polymeren, bestehend aus

(a) Homopolymeren von meta- oder para-Isopropenyl-α,α-dimethylbenzylamin;

(b) Copolymeren von (i) meta- oder para-Isopropenyl-α,α-dimethylbenzylamin und (ii) mindestens einem weiteren ethylenisch ungesättigten Monomeren, das damit copolymerisierbar ist, wobei das Copolymere mindestens 1 Gew.-% Wiederholungseinheiten enthält, die von dem Amin-Comonomeren (i) stammen; oder

(c) Säuresalzen der Homopolymeren (a) und Copolymeren (b).

7. Papierschlichtmittel-Zusammensetzung, umfassend eine wässrige Lösung, enthaltend von etwa 0,01 Gew.-% bis etwa 3 Gew.-% eines Polymeren, bestehend aus

(a) Homopolymeren von meta- oder para-Isopropenyl-α,α-dimethylbenzylamin;

(b) Copolymeren von (i) meta- oder para-Isopropenyl-α,α-dimethylbenzylamin und (ii) mindestens einem weiteren ethylenisch ungesättigten Monomeren, das damit copolymerisierbar ist und wobei das Copolymere mindestens 1 Gew.-% Wiederholungseinheiten enthält ist, die von dem Amin-Comonomeren (i) stammen; oder

(c) Säuresalzen der Homopolymeren (a) und Copolymeren (b).

8. Schlichtmittelzusammensetzung gemäß Anspruch 8, gekennzeichnet durch einen sauren pH.

**Revendications pour les Etats contractants: BE CH DE FR GB IT LI NL SE**

1. Composé méta ou para de formule:

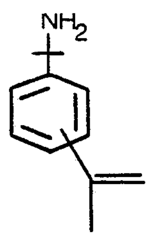

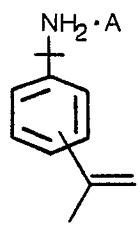

où A est un acide minéral ou un acide carboxylique.

2. Procédé de préparation de méta- ou de para-isopropényl-α,α-diméthylbenzylamine caractérisé par:

(a) l'hydrolyse de l'isomère méta ou para correspondant de l'isocyanate d'isopropényl-α,α-diméthylbenzyle en présence d'acide chlorhydrique ou d'acide sulfurique pour former le sel de l'isopropényl-α,α-diméthylbenzylamine; et

(b) la réaction dudit sel d'isopropényl-α,α-diméthylbenzylamine avec un excès stoechiométrique d'hydroxyde de sodium pour former ladite isopropényl-α,α-diméthylbenzylamine.

3. Procédé de préparation de méta- ou de para-isopropényl-α,α-diméthylbenzylamine par hydrolyse de l'isomère méta ou para correspondant du N-(3-isopropényl-α,α-diméthylbenzyl)carbamate de méthyle.

4. Procédé de préparation de méta-isopropényl-α,α-diméthylbenzylamine comprenant:

(a) le chauffage d'une première solution d'isocyanate de m-isopropényl-α,α-diméthylbenzyle dans du méthanol pendant un temps suffisant pour former du N-(3-isopropényl-α,α-diméthylbenzyl)carbamate de méthyle (TMU) dans ladite première solution;

(b) le mélange de ladite première solution contenant du N-(3-isopropényl-α,α-diméthylbenzyl)carbamate de méthyle avec de l'hydroxyde de potassium et du 2-méthoxyéthanol pour former une seconde solution;

(c) le chauffage de ladite seconde solution pendant un temps suffisant et à une température suffisante pour transformer ledit TMU en m-isopropényl-α,α-diméthylbenzylamine; et

(d) la récupération de la m-isopropényl-α,α-diméthylbenzylamine à partir de ladite seconde solution.

5. Poly(m-isopropényl-α,α-diméthylbenzylamine) ou poly(p-isopropényl-α,α-diméthylbenzylamine) formé à partir du composé de la revendication 1.

6. Copolymère de méta- ou de para-isopropényl-α,α-diméthylbenzylamine et d'au moins un autre comonomère à insaturation éthylénique copolymérisable avec elle.

7. Procédé d'encollage du papier comprenant l'application à celui-ci d'une quantité efficace pour l'encollage d'un polymère constitué de:

(a) les homopolymères de méta- ou de para-isopropényl-α,α-diméthylbenzylamine;

(b) les copolymères de (i) la méta- ou la para-isopropényl-α,α-diméthylbenzylamine et (ii) au moins un autre monomère à insaturation éthylénique copolymérisable avec elle, ledit copolymère contenant au moins 1% en poids de motifs dérivés de ladite amine comonomère (i); ou

(c) les sels d'acides desdits homopolymères (a) et copolymères (b).

8. Une composition d'encollage du papier comprenant une solution aqueuse contenant d'environ 0,01% à environ 3% en poids d'un polymère constitué de:

(a) les homopolymères de méta- ou de para-isopropényl-α,α-diméthylbenzylamine;

(b) les copolymères de (i) le méta- ou la para-isopropényl-α,α-diméthylbenzylamine et (ii) au moins un autre monomère à insaturation éthylénique copolymérisable avec elle, ledit copolymère contenant au moins 1% en poids de motifs dérivés de ladite amine comonomère (i); ou

(c) les sels d'acides desdits homopolymères (a) et copolymères (b).

9. Composition d'encollage selon la revendication 8 caractérisée par un pH acide.

**Revendications pour l'Etat contractant: AT**

1. Procédé de préparation de méta- ou de para-isopropényl-α,α-diméthylbenzylamine caractérisé par:

(a) l'hydrolyse de l'isomère méta ou para correspondant de l'isocyanate d'isopropényl-α,α-diméthylbenzyle en présence d'acide chlorhydrique ou d'acide sulfurique pour former le sel de l'isopropényl-α,α-diméthylbenzylamine; et

(b) la réaction dudit sel d'isopropényl-α,α-diméthylbenzylamine avec un excès stoechiométrique d'hydroxyde de sodium pour former ladite isopropényl-α,α-diméthylbenzylamine.

2. Procédé de préparation de méta- ou de para-isopropényl-α,α-diméthylbenzylamine par hydrolyse de l'isomère méta ou para correspondant du N-(3-isopropényl-α,α-diméthylbenzyl)carbamate de méthyle.

3. Procédé de préparation de méta-isopropényl-α,α-diméthylbenzylamine comprenant:

(a) le chauffage d'une première solution d'isocyanate de m-isopropényl-α,α-diméthylbenzyle dans du méthanol pendant un temps suffisant pour former du N-(3-isopropényl-α,α-diméthylbenzyl)carbamate de méthyle (TMU) dans ladite première solution;

(b) le mélange de ladite première solution contenant du N-(3-isopropényl-α,α-diméthylbenzyl)carbamate de méthyle avec de l'hydroxyde de potassium et du 2-méthoxyéthanol pour former une seconde solution;

(c) le chauffage de ladite seconde solution pendant un temps suffisant et à une température suffisante pour transformer ledit TMU en m-isopropényl-α,α-diméthylbenzylamine; et

(d) la récupération de la m-isopropényl-α,α-diméthylbenzylamine à partir de ladite seconde solution.

4. Procédé de préparation de poly(m-isopropényl-α,α-diméthylbenzylamine) ou poly(p-isopropényl-α,α-diméthylbenzylamine), caractérisé en ce qu'on polymérise de la méta- ou para-isopropényl-α,α-diméthyl benzylamine, respectivement.

5. Procédé de préparation d'un copolymère par copolymérisation de méta- ou de para-isopropényl-α,α-diméthylbenzylamine et d'au moins un autre comonomère à insaturation éthylénique copolymérisable avec elle.

6. Procédé d'encollage du papier comprenant l'application à celui-ci d'une quantité efficace pour l'encollage d'un polymère constitué de:

(a) les homopolymères de méta- ou de para-isopropényl-α,α-diméthylbenzylamine;

(b) les copolymères de (i) la méta- ou la para-isopropényl-α,α-diméthylbenzylamine et (ii) au moins un autre monomère à insaturation éthylénique copolymérisable avec elle, ledit copolymère contenant au moins 1% en poids de motifs dérivés de ladite amine comonomère (i); ou

(c) les sels d'acides desdits homopolymères (a) et copolymères (b).

7. Une composition d'encollage du papier comprenant une solution aqueuse contenant d'environ 0,01% à environ 3% en poids d'un polymère constitué de:

(a) les homopolymères de méta- ou de para-isopropényl-α,α-diméthylbenzylamine;

(b) les copolymères de (i) le mèta- ou la para-isopropényl-α,α-diméthylbenzylamine et (ii) au moins un autre monomère à insaturation éthylénique copolymérisable avec elle, ledit copolymère contenant au moins 1% en poids de motifs dérivés de ladite amine comonomère (i); ou

(c) les sels d'acides desdits homopolymères (a) et copolymères (b).

8. Composition d'encollage selon la revendication 7 caractérisée par un pH acide.